# EUROPEAN PATENT APPLICATION

(11) **EP 4 556 638 A1**
(43) Date of publication of application: **21.05.2025**
(21) Application number: 24211261.3
(22) Date of filing: 06.11.2024
(51) Int. Cl.: E02F 3/34

(54) **FRONT LOADER LOCKING MECHANISM FOR A WORK VEHICLE AND WORK VEHICLE COMPRISING THE SAME**

(30) Priority: 14.11.2023 IT 202300024135
(71) Applicant: CNH Industrial Italia S.p.A., 10156 Torino (IT)
(72) Inventor: Pipitone, Edoardo, 10156 Turin (IT); Panunzio, Salvatore, 10156 Turin (IT); Kumar, Tarun, 10156 Turin (IT)
(74) Representative: CNH Industrial IP Department

(57) **Abstract**

Locking mechanism (10) for a front loader (5) of a work vehicle (1), comprising a bearing frame (11), which is adapted to be connected to the front loader (5) or is part of the front loader (5) and adapted to be fixed to a main body (2) of the work vehicle (1); a hook (12), which is rotatable about a rotational axis (R) relative to the bearing frame (11) between a first angular position, in which it is adapted to engage a striker (30) of the work vehicle (1), and a second angular position, in which it is adapted to disengage the striker (30); a first spring (13), which is adapted to cooperate with the bearing frame (11) and the hook (12); the first spring (13) being adapted to bias the hook (12) towards the first angular position; and a pawl (14), which is adapted to prevent the hook (12) in the second angular position from rotating towards the first angular position.

## Description

### TECHNICAL FIELD

The present invention concerns a front loader locking mechanism for a work vehicle and a work vehicle comprising the same.

### BACKGROUND OF THE INVENTION

Work vehicles are known comprising a main body, a plurality of wheels or tracks adapted to move the main body relative to the ground and a front loader movably connected to the main body and adapted to move and dig materials like gravel, sand and manure.

In detail, the front loader generally comprises a frame, which is attached to the main body and rotatable about a first horizontal axis relative to the main body; a bucket, which is supported by the frame and may be rotatable relative to the frame about a second horizontal axis and hydraulic actuators adapted to drive the frame and/or the bucket in rotation about the respective first and second horizontal axes.

The connection of the front loader to the main body of the work vehicle involves several steps, many of which have to be carried out manually by trained assembly workers. Indeed, the assembly operations entail handling a great number of components and may be time-consuming and complex.

Therefore, a need is felt to increase the efficiency and convenience with which the front loader is connected to the main body of the work vehicles.

An aim of the present invention is to satisfy the above mentioned need in a cost-effective and optimized manner.

### SUMMARY OF THE INVENTION

The aforementioned aim is reached by a front loader locking mechanism, as claimed in the appended independent claim.

Preferred embodiments of the invention are realized according to the claims dependent or related to the above independent claim.

### BRIEF DESCRIPTION OF DRAWINGS

For a better understanding of the present invention, one preferred embodiment is described in the following, by way of a non-limiting example, with reference to the attached drawings wherein:
- Figure 1 is a lateral view of a work vehicle comprising a front loader and a front loader locking mechanism according to the present invention, with parts removed for clarity;
- Figure 2 is perspective view of the work vehicle and the front loader locking mechanism of Figure 1 on an enlarged scale;
- Figures 3, 4, 5 and 6 illustrate a portion of the front loader locking mechanism of Figures 1 and 2 in four respective operative positions and with parts removed for clarity; and
- Figures 7 and 8 are perspective views of the front loader locking mechanism in the operative position shown in Figure 5 and with parts removed for clarity.

### DETAILED DESCRIPTION OF THE INVENTION

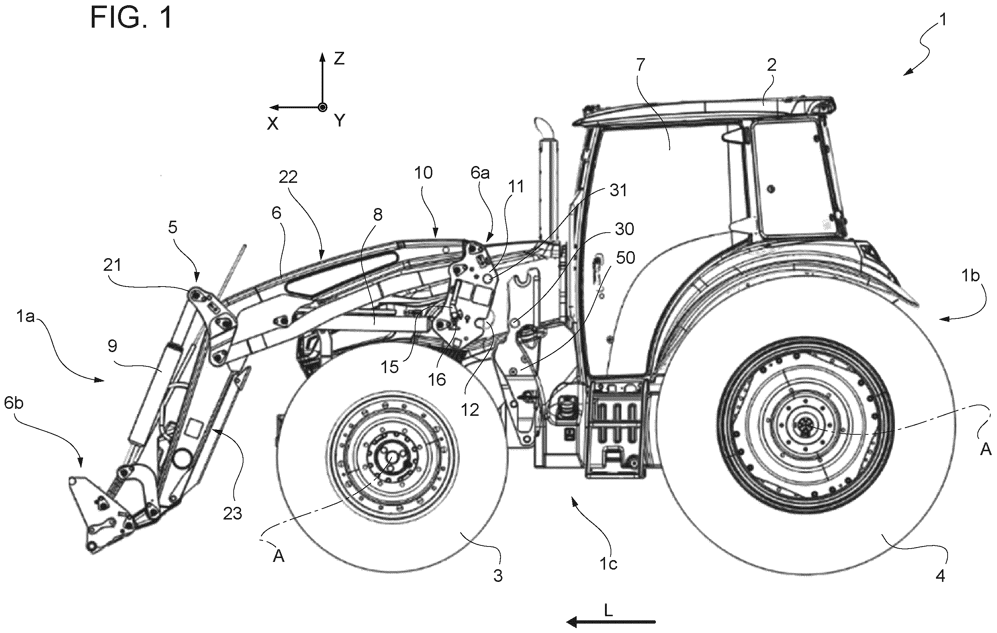

With reference to Figure 1, numeral 1 indicates a work vehicle, in particular an agricultural vehicle such as a tractor. Work vehicle 1 comprises a main body 2 and a plurality of wheels 3, 4, which are rotatable about respective rotational axes A so as to move main body 2 with respect to the ground. Work vehicle 1 further comprises a cabin 7, which is adapted to accommodate the driver and possibly one or more passengers.

Work vehicle 1 also comprises a front portion 1a and a rear portion 1b, which are opposite to each other along an advancing direction L of work vehicle 1.

It is possible to define a longitudinal direction X of work vehicle 1, a direction Z, which is orthogonal to direction X and vertical to the ground and a direction Y, which is orthogonal to both directions X and Z.

It is also possible to define a left side 1c and a right side 1d of work vehicle 1 considering the advancing direction L. In detail, Figure 1 shows the left side 1c of work vehicle 1.

Work vehicle 1 further comprises a front loader 5, which is movably connected to main body 2 at front portion 1a (Figure 1) .

By way of example, front loader 5 is adapted to move and dig materials like gravel, sand and manure.

Front loader 5 comprises a not-shown bucket, a frame 6, which is adapted to rotate relative to main body 2 and to support the bucket relative to main body 2 and a plurality of actuators 8, 9 - preferably hydraulic actuators - which are adapted to drive the bucket and/or frame 6 in rotation.

Frame 6 comprises a first end 6a and a second end 6b, which are opposite to each other along longitudinal direction X. First end 6a is arranged on the side of rear portion 1b and second end 6b is arranged on the side of front portion 1a.

Moreover, in the embodiment shown, frame 6 comprises a first set of components on the left side 1c and a second set of components on the right side 1d. In the following of the present description, frame 6 will be described with reference to the components thereof on left side 1c, being the components of frame 6 on the right side 1d identical to the components of frame 6 on the left side 1c.

In detail, frame 6 comprises, in turn, a bearing frame 11, which is adapted to be attached to main body 2 and is arranged at first end 6a. In addition, the bucket is arranged at second end 6b.

Front loader 5 further comprises:
- a bracket 21, which is interposed between bearing frame 11 and the bucket along longitudinal direction X;
- a structure 22, which is connected to both brackets 11 and 21; and
- a structure 23, which is connected to structure 22 and the bucket.

Bracket 21 and structures 22 and 23 will not be described in detail in the following, as they are components of front loaders known to the person skilled in the art.

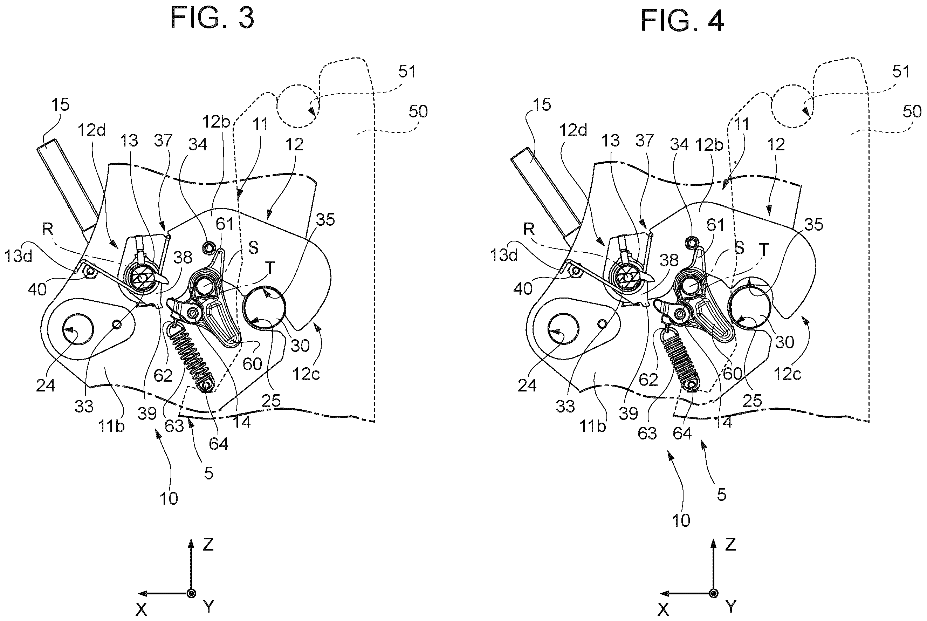

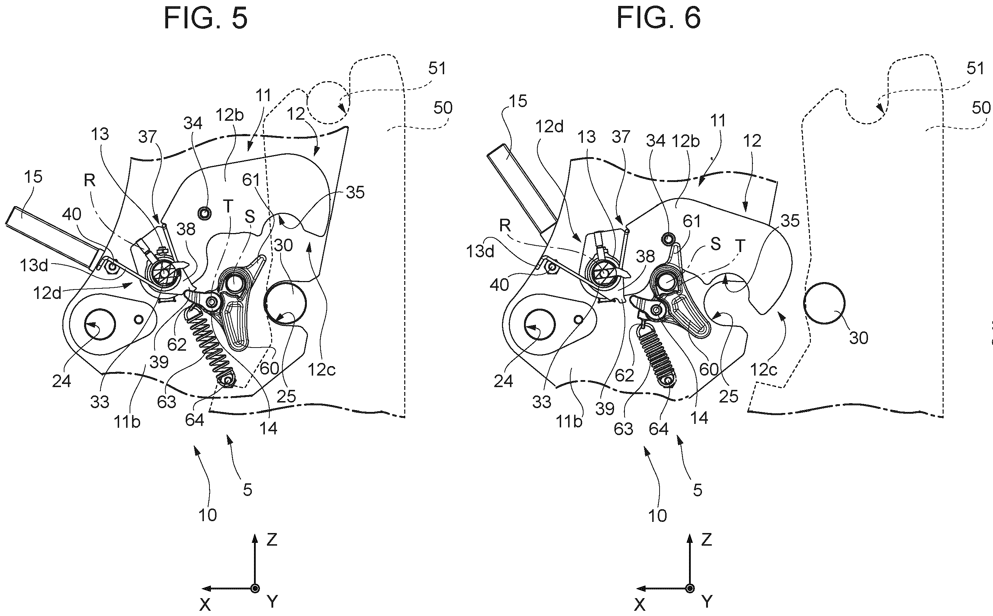

Advantageously, work vehicle 1 comprises a locking mechanism 10, which is adapted to attach front loader 5 to main body 2. Main body 2 comprises a striker 30 and locking mechanism 10 comprises:
- the bearing frame 11,
- a hook 12, which is rotatable relative to bearing frame 11 about a rotational axis R between a first angular position (Figure 3), in which it is adapted to engage striker 30 and a second angular position (Figure 5), in which it is adapted to be disengaged from striker 30;
- a spring 13, which is adapted to cooperate with bearing frame 11 and hook 12 to bias hook 12 towards the first angular position; and
- a pawl 14, which is adapted to prevent hook 12 in the second angular position from rotating towards the first angular position.

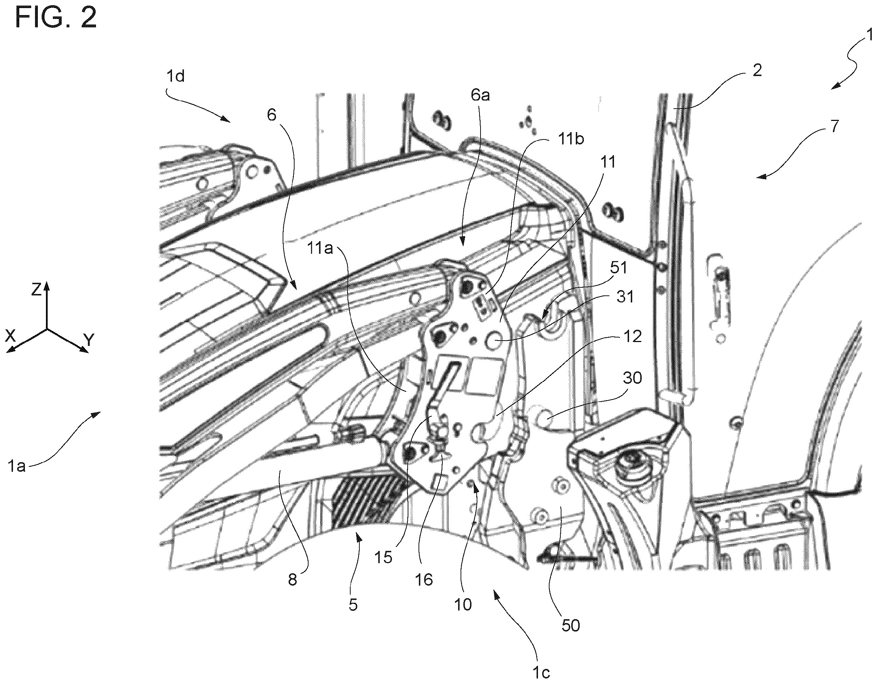

In detail, as shown in Figures 1 and 2, main body 2 comprises two structures 50, which are respectively arranged on left and right sides 1c, 1d and which each comprise a respective striker 30. Structures 50 are fixed relative to the rest of main body 2 and are adapted to support the front loader 5. In further detail, structures 50 are arranged at a portion of main body 2 ahead of cabin 7 along longitudinal direction X.

Furthermore, as shown in Figure 2, each structure 50 comprises a respective seat 51. In detail, seat 51 has the shape of a semicircle in a plane perpendicular to direction Y and it is arranged at a topmost end of structure 50 along direction Z.

For the sake of clarity, Figures 1 and 2 show front loader 5 in a condition in which it is not yet connected to and supported by structures 50, but it is spaced away therefrom.

Bearing frame 11 comprises two bodies 11a, 11b spaced from each other parallel to direction Y. Bodies 11a and 11b are fixed and integral to each other. In detail, body 11a is arranged so as to face main body 2 and body 11b is opposite main body 2 with respect to body 11a. Preferably, bodies 11a and 11b are identical to each other and their contours are aligned to one another considering a plane perpendicular to direction Y. In addition, bodies 11a, 11b are planar and directed orthogonally to direction Y.

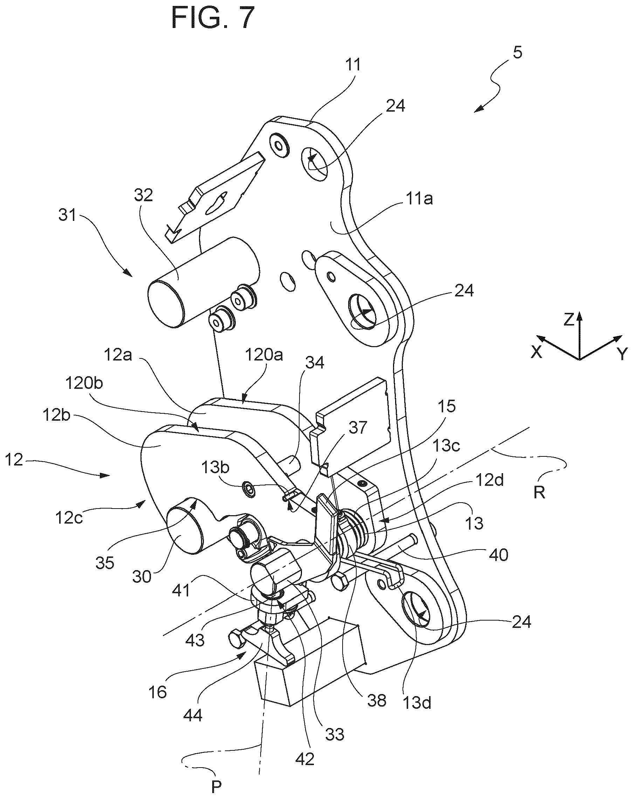

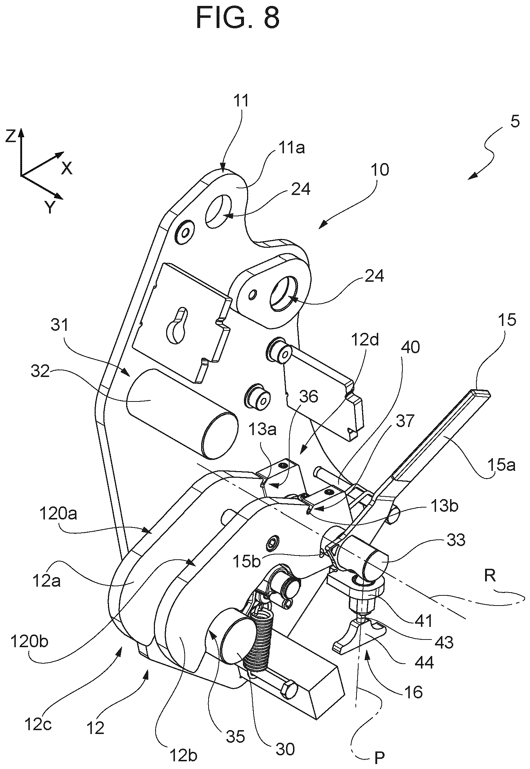

Bearing frame 11 comprises a plurality of holes or seats 24 at bodies 11a and/or 11b for the connection of structure 22 and actuator 8 to bearing frame 11 (Figures 7 and 8).

Bearing frame 11 further comprises a seat 25 at both bodies 11a and 11b adapted to accommodate striker 30 at least when hook 12 is in the first angular position. In the embodiment shown, seat 25 has a circular shape in a plane perpendicular to axis R.

Bearing frame 11 is also adapted to be hinged to main body 2 at a hinge 31 (Figure 1). In detail, bearing frame 11 comprises a pin 32, which is fixed to both bodies 11a and 11b and adapted to engage seat 51 to define hinge 31. Pin 32 extends along a direction parallel to rotational axis R. In further detail, when hook 12 is disengaged from striker 30, bearing frame 11 is rotatable relative to main body 2 about hinge 31.

Bearing frame 11 also comprises a rod 40, which extends parallel to rotational axis R. In detail, rod 40 is fixed to both bodies 11a and 11b. In further detail, rod 40 is cylindrical (Figure 7).

Hook 12, spring 13 and pawl 14 are arranged in the space interposed between body 11a and body 11b parallel to direction Y.

Hook 12 also comprises a pin 33, which is rotatably fixed to bearing frame 11 and which defines the rotational axis R.

Hook 12 further comprises a body 12a and a body 12b, which are spaced from each other parallel to rotational axis R and are fixed to each other. Preferably, bodies 12a and 12b are identical to each other and their respective contours 120a, 120b are aligned to one another considering a plane perpendicular to rotational axis R. In addition, bodies 12a, 12b are planar and directed orthogonally to rotational axis R. In the embodiment shown, body 12a is arranged to face body 11a and body 12b is arranged to face body 11b.

In addition, preferably, rotational axis R is parallel to direction Y.

Pin 33 is fixed to both bodies 12a and 12b and protrudes past body 12b on the side opposite to body 12a. In detail, pin 33 passes through a corresponding not-shown hole of body 12b. Pin 33 also protrudes past body 11b on the side opposite to body 11a. In detail, pin 33 passes through a corresponding not-shown hole of body 11b.

Hook 12 further comprises a pin 34, which is fixed to both bodies 12a and 12b and is rotatable around rotational axis R integrally with bodies 12a and 12b. Pin 34 extends parallel to rotational axis R along the entire distance between bodies 12a and 12b parallel to rotational axis R.

Hook 12 also comprises a seat 35 at both bodies 12a and 12b adapted to engage striker 30 when hook 12 is in the first angular position. In the embodiment shown, seat 35 has a circular shape in a plane perpendicular to axis R.

In detail, hook 12 comprises two ends 12c, 12d, which are opposite to each other along longitudinal direction X. End 12c is arranged on the side of rear portion 1b and end 12d is arranged on the side of front portion 1a.

In further detail, seat 35 is arranged at end 12c or in proximity thereto, pin 33 is arranged at end 12d and pin 34 is interposed between end 12c and end 12d parallel to longitudinal axis X.

Bodies 12a and 12b also comprise respective seats 36, 37, at respective contours 120a and 120b, which extend parallel to rotational axis R. Seats 36 and 37 are grooves extending along the entire thickness of the respective bodies 12a and 12b. Preferably, seats 36 and 37 are aligned to one another considering a plane perpendicular to rotational axis R.

Locking mechanism 10 also comprises an element 38, which is fixed to hook 12 and rotatable integrally with it about rotational axis R. In detail, element 38 is rotatable integrally with hook 12 between the first angular position and the second angular position of hook 12.

Element 38 is fitted about pin 32 and interposed between bodies 12a and 12b parallel to rotational axis R. In further detail, element 38 comprises an appendix 39, which radially protrudes with respect to pin 32.

As shown in Figure 8, spring 13 comprises an end 13a, which is adapted to cooperate with body 12a and an end 13b, which is opposite to end 13a along the length of spring 13 and adapted to cooperate with body 12b. In detail, end 13a is arranged at seat 36 and end 13b is arranged at seat 37.

Spring 13 also comprises a portion 13c, which is wound about pin 33. In detail, portion 13c is completely arranged between bodies 12a and 12b along direction Y. In further detail, portion 13c comprises, in turn, a first stretch interposed between body 12a and element 38 along direction Y and a second stretch interposed between element 38 and body 12b along direction Y (Figure 7).

In addition, spring 13 comprises a portion 13d, which is adapted to cooperate with rod 40. In detail, portion 13d is adapted to contact rod 40. In further detail, portion 13d is adapted to constantly contact rod 40, i.e., in any angular position of hook 12 about rotational axis R. The contact forces between rod 40 and portion 13d elastically bias hook 12 toward the first angular position.

As shown in Figures 3 to 6, spring 13 contacts rod 40 on a side thereof facing upwards, e.g., towards pin 32.

Portion 13d protrudes from portion 13c on the side opposite to end 12c along longitudinal direction X. In further detail, portion 13d is interposed between the first stretch of portion 13c and the second stretch of portion 13c along the length of spring 13.

Preferably, portion 13d is L-shaped in a plane orthogonal to rotational axis R (Figures 3 to 6).

Locking mechanism 10 further comprises a lever 60, which is adapted to rotate about an axis S parallel to rotational axis R at least between a first position, in which it is in contact with structures 50 (Figure 3) and a second position, in which it contacts pin 34 (Figure 6). In detail, lever 60 is in the first position when hook 12 is in the first angular position and engages striker 30.

Figure 6 shows a condition in which hook 12 is spaced away from striker 30 and pin 32 is spaced away from seat 51. In such a condition, hook 12 tends to rotate towards the first angular position.

Furthermore, locking mechanism 10 comprises a spring 63, which is adapted to bias lever 60 towards the first position and a rod 64, which extends parallel to direction Y. In detail, rod 64 is fixed to both bodies 11a and 11b. In addition, spring 63 is fixed to lever 60 at a first longitudinal end thereof and to rod 64 at a second longitudinal end thereof. In the embodiment shown, spring 63 is a coil spring.

In further detail, lever 60 comprises an appendix 61, which is adapted to contact pin 34 and an appendix 62, at which spring 53 is fixed. Appendixes 61 and 62 are opposite to each other relative to rotational axis S. Preferably, appendix 62 has an eyelet shape.

As shown in Figures 3, 4 and 5, pawl 14 is adapted to rotate about an axis T parallel to rotational axis R between a first position, in which it is angularly spaced away from element 38 and a second position, in which it contacts element 38. In detail, when hook 12 is in the first angular position, pawl 14 is in the first position (Figure 3); when hook 12 is in the second angular position, pawl 14 is in the second position (Figure 5).

In further detail, pawl 14 in the second position directly contacts element 38 at appendix 39 and prevents hook 12 from rotating towards the first angular position. More specifically, considering the arrangement shown in Figure 5, pawl 14 in the second position prevents element 38 and therefore hook 12 from rotating clockwise.

Pawl 14 is also rotatable about rotational axis S integrally with lever 60. In other words, pawl 14 is rotatably carried by lever 60.

Locking mechanism 10 also comprises a not-shown torsion spring, which is adapted to cooperate with pawl 14 to bias it towards the relative second position. In detail, the torsion spring is at least partially wound about pawl 14.

Furthermore, pawl 14 in the first position is arranged on a side of appendix 39 facing end 12c; pawl 14 in the second position is arranged on a side of appendix 39 opposite to end 12c. In addition, pawl 14 is adapted to move from the first position to the second position by bypassing appendix 39 on one side and arranging itself in contact with appendix 39 on the other side. Moreover, during the movement of pawl 14 from the first position to the second position, pawl 14 and lever 60 are adapted to rotate about axis S (anti-clockwise with reference to Figures 3 to 5) to allow pawl 14 to bypass appendix 39 against the action of the torsional spring.

Locking mechanism 10 also comprises a manual lever 15, which is rotatable integrally with hook 12 between a locking position and an unlocking position. In detail, the locking position corresponds to the first angular position of hook 12 and when the unlocking position corresponds to the second angular position of hook 12.

In detail, manual lever 15 is fixed to pin 33 and extends along a direction perpendicular to rotational axis R.

As shown in Figure 2, manual lever 15 is arranged on the side of body 11b opposite to body 11a. Furthermore, manual lever 15 preferably comprises a gripping portion 15a, which is adapted to be manually gripped by an operator, and an indicator 15b, which is adapted to indicate whether manual lever 15 is in the locked position or the unlocked position (Figure 8).

Preferably, body 11b comprises a not-shown visual scale arranged on the side of body 11b opposite to body 11a. By way of example, the visual scale is a semicircle-shaped sticker comprising a red-colored angular sector and a green-colored angular sector adjacent to each other. In detail, indicator 15b is aligned with the green-colored angular sector, when manual lever 15 is in the locking position; indicator 15b is aligned with the red-colored angular sector, when manual lever 15 is in the unlocking position, or vice versa.

During the rotation of manual lever 15, the angular position of indicator 15b relative to the visual scale allows the user to understand whether hook 12 is in the first angular position or the second angular position.

Locking mechanism 10 further comprises a safety device 16, which is adapted to cooperate with manual lever 15 to prevent manual lever 15 from inadvertently rotating. In detail, when manual lever 15 is in the locking position, safety device 16 prevents manual lever 15 from rotating away from the locking position; when manual lever 15 is in the unlocking position, safety device 16 prevents manual lever 15 from rotating away from the unlocking position.

Safety device 16 comprises:
- a support 41, which is fixed to body 11b and comprises a through hole 42; and
- a pin 43, which is adapted to slide relative to support 41 between a first position, in which it contacts pin 33 and a second position, in which it is spaced away from pin 33.

Pin 43 is elastically loaded toward the first position, wherein it exerts a force onto pin 33 that prevents hook 12 and manual lever 15 from rotating about rotational axis R.

In further detail, pin 43 slidably engages hole 42 along a direction P, which is orthogonal and radial to rotational axis R. More specifically, hole 42 is arranged so as to face pin 33 and pin 43 in the first position is adapted to pass through hole 42.

Safety device 16 further comprises a grip 44, which is integral with pin 43 and which can be gripped to move pin 43 from the first position to the second position, against the spring-biasing force acting on pin 43. When grip 44 is released, pin 43 is elastically forced to the first position.

Preferably, the end of pin 43 that is adapted to contact pin 33 is hemispherical.

The assembly of front loader 5 to main body 2 through locking mechanism 10 is described in the following.

When bearing frame 11 is spaced away from structures 50, appendix 61 contacts pin 34 and hook 12 tends to rotate towards the first angular position, even though it does not engage striker 30 (Figures 1, 2 and 6).

Bearing frame 11 is then moved closer to structures 50, so as to allow pin 32 to engage seat 51. After pin 32 has engaged seat 51, bearing frame 11 is rotatable relative to hinge 31.

For the purpose of allowing hook 12 to engage striker 30, bearing frame 11 is then rotated about hinge 31 in such a way that striker 30 engages seat 25. In detail, as bearing frame 11 rotates toward striker 30 (anti-clockwise in Figures 3 to 6), hook 12 contacts striker 30 at end 12c and is forced to rotate towards the second angular position about rotational axis R against the action of spring 13.

Once hook 12 is sufficiently rotated towards the second angular position, striker 30 engages seat 35 and hook 12 rotates back to the first angular position. In this condition, manual lever 15 is in the locking position and lever 60 contacts structures 50 (Figure 3).

For the purpose of disengaging bearing frame 11 from striker 30, manual lever 15 is rotated from the locking position to the unlocking position, so as to cause a corresponding rotation of hook 12 from the first angular position to the second angular position (Figure 4).

In detail, for the purpose of rotating manual lever 15 from the locking position, grip 44 has to be pulled away from pin 33 in such a manner to overcome the spring-biasing force acting on pin 43. Manual lever 15 may be then rotated about rotational axis R while grip 44 is pulled.

During the rotation of manual lever 15, hook 12 rotates relative to bearing frame 11 about rotational axis R. At the same time, pawl 14 rotates from the first position towards the second position, in which it contacts element 38 on the side opposite to end 12c. In further detail, during the movement of pawl 14 from the first position to the second position, pawl 14 and lever 60 rotate integrally about axis S to allow pawl 14 to bypass appendix 39 against the action of the torsional spring.

At the end of the rotation of manual lever 15, grip 44 is released and pin 43 is elastically forced back to the first position, in which it prevents manual lever 15 from rotating from the unlocking position.

In addition, at the end of the rotation, hook 12 reaches its second angular position, wherein striker 30 is disengaged from seat 35 (Figure 5).

In use, once hook 12 is in the first angular position, striker 30 is engaged in seat 35 and bracket 12 is connected to main body 2 through both hinge 31 and striker 30. As a result, front loader 5 is efficiently and securely connected to main body 2 and may be used for carrying out work operations.

In view of the foregoing, the advantages of locking mechanism 10 and work vehicle 1 according to the invention are apparent.

In particular, locking mechanism 10 allows front loader 5 to be connected to main body 2 in an efficient and convenient way. Since locking mechanism 10 comprises hook 12, spring 13 and pawl 14, many of the steps that need be manually carried out to connect the known front loaders to the main body of the work vehicles discussed in the introductory part of the present description can be significantly simplified. Indeed, the simple rotation of the hook 12 between the first angular position and the second angular position ensures that the front loader 5 is securely connected to main body 2.

Since locking mechanism 10 comprises manual lever 15, the rotation of hook 12 between the first and second angular positions may be conveniently carried out.

It is clear that modifications can be made to the front loader locking mechanism 10 and the work vehicle 1 which do not extend beyond the scope of protection defined by the claims.

In particular, bearing frame 11 might comprise a single body 11a or 11b instead of two bodies 11a, 11b spaced away from each other parallel to direction Y. Analogously to the above, hook 12 might comprise a single body 12a or 12b instead of two bodies 12a, 12b spaced away from each other parallel to rotational axis R.

## Claims

1. Locking mechanism (10) for a front loader (5) of a work vehicle (1), comprising:
- a bearing frame (11), which is adapted to be connected to said front loader (5) or is part of said front loader (5) and adapted to be fixed to a main body (2) of said work vehicle (1) ;
- a hook (12), which is rotatable about a first rotational axis (R) relative to said bearing frame (11) between a first angular position, in which it is adapted to engage a striker (30) of said work vehicle (1), and a second angular position, in which it is adapted to disengage said striker (30);
- a first spring (13), which is adapted to cooperate with said bearing frame (11) and said hook (12); said first spring (13) being adapted to bias said hook (12), in use, towards said first angular position; and
- a pawl (14), which is adapted to prevent said hook (12) in said second angular position from rotating towards said first angular position.

2. Locking mechanism according to claim 1, wherein said hook (12) comprises:
- a pin (33), which is rotatably fixed to said bearing frame (11) and defines said first rotational axis (R);
- a seat (35), which is adapted to engage said striker (30) when said hook (12) is, in use, in said first angular position.

3. Locking mechanism according to claim 2, further comprising:
- a manual lever (15), which is rotatable about said rotational axis (A) integrally with said pin (33) between a locking position and an unlocking position; wherein when said manual lever (15) is in said locking position, said hook (12) is in said first angular position and when said manual lever (15) is in said unlocking position, said hook (12) is in said second angular position; and
- a safety device (16), which is adapted to selectively cooperate with said pin (33) to prevent the rotation of said manual lever (15) about said first rotational axis (R).

4. Locking mechanism according to claim 3, wherein said safety device (16) comprises:
- a support (41), which is fixed to said bearing frame (11) and comprises a through hole (42); and
- a pin (43), which slidably engages said through hole (42) and is adapted to slide relative to said support (41) between a first position, in which it contacts said pin (33) and a second position, in which it is spaced away from said pin (33);
said pin (43) being subject to an elastic force, which biases it, in use, toward said first position.

5. Locking mechanism according to claim 4, wherein said safety device (16) further comprises a grip (44), which is integral with said pin (43) and which can be gripped to move said pin (43) from said first position to said second position against said elastic force.

6. Locking mechanism according to any one of claims 2 to 5, wherein said bearing frame (11) comprises a rod (40) and said first spring (13) comprises at least a first portion (13c), which is wound about said pin (33) and a second portion (13d), which protrudes from said pin (33) radially with respect to said rotational axis (R);
said second portion (13d) being adapted to cooperate with said rod (40) to bias said hook (12) toward said first angular position.

7. Locking mechanism according to any one of the foregoing claims, further comprising an element (38), which is fixed to said hook (12) and rotatable integrally with it about said rotational axis (R); said pawl (14) being adapted to contact said element (38) when said hook (12) is in said second angular position.

8. Locking mechanism according to claims 2 and 7, wherein said element (38) is fitted about said pin (33).

9. Locking mechanism according to any one of the foregoing claims, further comprising a lever (60), which is rotatable about a second rotational axis (S) relative to said bearing frame (11); said lever (60) being adapted to contact a portion (50) of said main body (2) in at least some of its angular positions about said second rotational axis (S);
said pawl (14) being rotatable about a third rotational axis (T) relative to said bearing frame (11); said second rotational axis (S) and said third rotational axis (T) being parallel to said first rotational axis (R);
said pawl (14) being further rotatable about said second rotational axis (S) with said lever (60).

10. Front loader (5) for a work vehicle (1) comprising:
- a bucket;
- a frame (6) adapted to be rotatably fixed to a main body (2) of said work vehicle (1) and to support said bucket relative to said main body (2); and
- a front loader locking mechanism (10) according to any one of the foregoing claims and adapted to connect said frame (6) to said main body (2).

11. Work vehicle (1) comprising:
- a main body (2);
- a plurality of wheels (3, 4) or tracks adapted to move said main body (2) relative to the ground;
said work vehicle (1) also comprising:
- a front portion (1a) and a rear portion (1b) according to an advancement direction (L) thereof;
- a front loader (5) arranged at said front portion (1a); and
- a front loader locking mechanism (10) according to any one of claims 1 to 9, which is adapted to attach said front loader (5) to said main body (2).
